# FASCICULE DE BREVET EUROPEEN

(11) **EP 0 324 739 B1**
(45) Date de publication et mention de la délivrance du brevet: **24.04.1996**
(21) Numéro de dépôt: 87904899.9
(22) Date de dépôt: 31.07.1987
(51) Int. Cl.: B65B 9/20, B65B 9/22, B65D 75/48, B65H 45/22

(54) **INSTALLATION POUR CONFECTIONNER, EMPLIR ET FERMER DES EMBALLAGES FAITS A PARTIR D'UNE BANDE CONTINUE DE MATIERE NOTAMMENT THERMOSOUDABLE, ET EMBALLAGE**
ANLAGE ZUM HERSTELLEN, FÜLLEN UND SCHLIESSEN VON AUS EINER ENDLOSEN KUNSTSTOFFBAHN HERGESTELLTEN VERPACKUNGEN SOWIE VERPACKUNG
INSTALLATION FOR MAKING, FILLING AND CLOSING PACKAGES MADE FROM A CONTINUOUS STRIP OF MATERIAL, IN PARTICULAR HEAT-SEALABLE AND PACKING

(43) Date de publication de la demande: 26.07.1989
(73) Titulaire: Velitchkoff, William, 75008 Paris (FR); AFCEICA SA, 45410 Artenay (FR)
(72) Inventeur: VELITCHKOFF, William, Nicolas, F-75008 Paris (FR); RODRIGUEZ, Pierre, F-94800 Villejuif (FR)
(74) Mandataire: Colas, Jean-Pierre
(86) Numéro de dépôt international: FR8700303
(87) Numéro de publication internationale: WO8900949

(56) Documents cités:
- DE-A- 3 027 521
- FR-A- 2 102 442
- FR-A- 2 332 906
- GB-A- 1 049 928
- US-A- 4 578 051

## Description

La présente invention est relative à un appareillage destiné à confectionner, emplir et fermer des emballages, cette machine opérant à partir d'une bande continue de matière thermosoudable. En outre, la présente invention est relative à un emballage.

On connaît des machines destinées à faire les opérations indiquées à partir d'une bande de carton, afin d'emballer, notamment des boissons, telles que le lait, et de former des emballages en forme de parallélépipède rectangle. Le carton présente par lui-même une raideur appréciable, et pour obtenir qu'il se plie aux endroits désirés, il est nécessaire de prévoir à l'avance des lignes de pliage obtenues par pressage. par ailleurs, le carton n'est pas thermosoudable par lui-même, et on est obligé de prévoir des colles, en général à activation par la chaleur.

Le fait que le carton est peu étanche par lui-même oblige à le doubler par une couche de matière d'étanchéité. Ces différentes particularités font que le coût d'un emballage en carton est relativement élevé, et on est porté à s'intéresser aux matières plastiques thermosoudables dans le but de réduire les prix de revient.

L'emploi de matières plastiques thermosoudables serait en outre de nature à simplifier les machines, mais la souplesse des substances fait qu'il est difficile d'obtenir des emballages de forme géométrique simple et comportant un fond plat, qui leur permette de tenir debout et facilite la manutention groupée de tels emballages en grand nombre.

Le brevet GB-A-1.043.408, en particulier, décrit un procédé de confection, remplissage et fermeture d'emballages en matière thermosoudable, ces emballages étant obtenus à partir d'une bande continue de cette matière, qu'on plie en deux longitudinalement sensiblement par le milieu. La bande ainsi pliée passe verticalement en descendant dans un ensemble comprenant deux paires de premiers rouleaux presseurs chauffants, tournant en continu et agissant une paire sur le pli de la bande et l'autre sur les deux bords libres de la bande. L'ensemble comprend en outre une paire de seconds rouleaux chauffants transversaux à la bande et venant la serrer par intervalles, situés en-dessous des premiers rouleaux presseurs, et des moyens de chargement, constitués par une goulotte qui s'insère entre les bords libres de la bande au-dessus des premiers rouleaux presseurs, et dont le point de déversement se trouve entre le niveau des premiers et des seconds rouleaux presseurs. On obtient par ce procédé des sachets convenablement remplis et fermés, mais de forme plus ou moins ovoïde, et dépourvus d'un fond plat qui permettrait d'en faire des arrangements stables.

FR-A-2 332 906 décrit une installation pour confectionner et remplir de liquide des emballages de forme prismatique à section transversale en forme d'hexagone régulier, à partir d'un matériau soudable relativement raide, tel qu'un complexe aluminium/matière plastique ou carton/matière plastique. L'installation qui est alimentée par un tube pourvu de deux plis rentrants latéraux, comprend successivement un poste de soudure des bords des plis, un poste de soudage réalisant une soudure transversale partielle du tube mais laissant subsister une partie non soudée centrale par laquelle passe un tube de remplissage des emballages, un poste de soudage servant à compléter la soudure transversale, des moyens de moulage par compression de l'emballage rempli visant à lui conférer une forme prismatique à section hexagonale régulière, et un poste de séparation des emballages au fur et à mesure de leur production. FR-A-2 332 906 ne décrit pas de moyens de réalisation du tube à plis rentrants de départ.

FR-A-2 102 442 décrit un sachet en matière plastique souple, de forme trapézoïdale, comportant deux faces soudées latéralement et réunies à leurs bords supérieurs et inférieurs par des plis rentrants.

Le but de l'invention est de fournir une machine permettant d'obtenir de tels sachets avec un fond plat, et qui puissent, par suite être rangés de façon serrée sur une surface plane et horizontale.

L'invention fournit en conséquence un appareillage pour la confection, l'emplissage et la fermeture d'emballages présentant un fond plat de forme générale rectangulaire et des bords latéraux sensiblement parallèles, à partir d'une bande continue de matière plastique souple thermosoudable, qui comprend successivement :
- des moyens comprenant au moins une filière pourvue d'une fente en forme de W à travers laquelle on fait passer la bande pour plier la bande longitudinalement de façon à former deux parois parallèles reliées, sur un de leurs bords longitudinaux, par un soufflet constitué d'un premier pli longitudinal et d'un second pli longitudinal, lesdites parois étant laissées libres sur leur autre bord longitudinal ;
- des moyens pour solidariser, à intervalles réguliers, lesdits plis auxdites parois par une soudure transversale de solidarisation n'affectant qu'une partie de la largeur de la bande pliée ;
- des moyens passant entre les bords longitudinaux libres des parois pour introduire la matière à emballer ;
- des moyens pour souder entre eux lesdits bords longitudinaux libres ;
- des moyens pour former, une soudure transversale se superposant à chaque soudure transversale de solidarisation précédemment effectuée, de façon à compléter la fermeture de l'emballage venant d'être rempli;
- des moyens (89) pour séparer les emballages les uns des autres.

En outre l'invention fournit l'emballage selon la revendication 10.

Les deux plis ne peuvent pas s'ouvrir complètement dans la suite des opérations, car ils sont solidarisés par la soudure transversale. Il en résulte que, après la soudure longitudinale des bords, la bande forme un tube vertical dont la section a la forme d'un triangle curviligne, dont les sommets sont les deux plis et la soudure longitudinale. On conçoit qu'après emplissage et fermeture de l'emballage, il suffise de faire pivoter celui-ci de 90° pour qu'un des côtés du triangle vienne constituer un fond plat.

De préférence, les deux plis longitudinaux sont symétriques par rapport à l'axe de symétrie de la bande. Dans ce cas, c'est la partie de la bande située entre ces deux plis qui constituera, après pivotement, le fond plat, la soudure longitudinale des bords se trouvant alors sensiblement au-dessus du milieu du fond plat, ce qui procure la meilleure stabilité.

Avantageusement, l'emballage est confectionné de façon que les plis longitudinaux ouverts vers l'intérieur de l'emballage, la solution inverse peut toutefois être envisagée, sa mise en oeuvre est un peu plus compliquée, car elle exige qu'on retourne les côtés de la bande entre chaque pli et le bord, et elle ne fournit pas une meilleure stabilité. En revanche, les plis longitudinaux ne font pas saillie à l'extérieur, ce qui peut être utile dans certaines manutentions.

Pour former les plis longitudinaux on fait passer la bande à travers un ensemble de pièces qui lui donnent une section transversale en W d'abord évasée puis plus fermée, cet ensemble se terminant en une sorte de filière. Une autre filière, plus fermée, à bords à peu près parallèles, peut servir à marquer les plis de manière précise et définitive.

Avantageusement, la machine comprend des moyens pour souder les plis longitudinaux sur eux-mêmes lors de leur formation. On obtient ainsi la certitude qu'ils seront conservés en place dans la suite des opérations, même en dehors des soudures transversales qui les solidarisent. On obtient en outre ainsi un fond plat à bords bien nets.

Pour que la soudure transversale qui solidarise les plis se fasse dans de bonnes conditions, il est avantageux de prévoir que la machine comprend, sur le trajet de la bande, entre le poste de formation des plis longitudinaux, et les moyens pour effectuer cette soudure, des rouleaux presseurs capables d'aplatir ces plis. S'il y a un poste pour souder les plis longitudinaux sur eux-mêmes, les rouleaux presseurs seront de préférence entre le poste de formation des plis et ce poste de soudure.

On notera que le poste de formation des plis longitudinaux et les moyens pour effectuer la soudure transversale, avec, s'il y en a, les moyens pour souder les plis longitudinaux sur eux-mêmes constituent un ensemble de préparation de la bande, qui peut faire partie de la machine pour confectionner les emballages, les remplir et et les fermer, mais qui peut aussi être placé dans une machine distincte, avec un stockage intermédiaire. Cette disposition peut permettre un fonctionnement plus souple. En effet, la machine qui remplit les emballages a une vitesse qui dépend des fournitures de matière à emballer, et ces fournitures ne sont pas nécessairement à la vitesse optimale pour l'ensemble de préparation. On peut même envisager que cet ensemble soit placé dans une usine alimentant plusieurs utilisateurs faisant la formation, l'emplissage et la fermeture des emballages à faible vitesse ou de façon non continue. Le stockage sur bobine de la bande préparée, qui n'est pas d'épaisseur constante d'un bord à l'autre, exige des précautions particulières, mais celles-ci sont connues de l'homme de métier.

La machine de confection, emplissage et fermeture des emballages, est, en elle-même, de type classique assez analogue aux machines pour emballages en carton, avec toutefois quelques particularités qu'on va mentionner.

Il importe que les soudures transversales qui séparent les emballages coïncident avec les soudures transversales de solidarisation des plis longitudinaux. Cela entraîne la nécessité d'un repérage, soit de la soudure elle-même, soit d'un repère imprimé sur la bande au moment de la confection des soudures de solidarisation, soit plutôt d'un repère préimprimé sur la bande et qui sert à commander à la fois la soudure de solidarisation et la soudure transversale. On sait qu'il est déjà courant de mettre en place de tels repères pour éviter un décalage des inscriptions ou dessins portés sur la bande pour identifier ou orner chaque emballage. Il convient aussi que les moyens de soudure transversale soient adaptés à l'épaisseur non constante de la bande préparée. Les rouleaux chauffants cylindriques doivent donc être remplacés par des pièces de forme adaptée, ainsi que cela sera décrit plus loin.

Le brevet GB-A-1.043.408 prévoit, pour la soudure longitudinale des bords, deux jeux de rouleaux, un de chaque côté de la bande pliée, et qui servent à la fois à la soudure et à l'entraînement de la bande. Cette disposition s'est avérée inadaptée au cas de la présente invention, car l'épaisseur, du côté des plis longitudinaux préparés à l'avance, n'est pas régulière. On a donc dû prévoir un dispositif agissant d'un seul côté, et de façon douce et progressive pour ne pas introduire de déformation ou tension exagérée dans la bande. Ce dispositif sera décrit plus loin.

D'un autre côté, par comparaison avec les machines pour emballages classiques en carton, il faudra prévoir en plus un poste pour faire faire à chaque emballage un pivotement d'un quart de tour pour amener le côté limité par les plis longitudinaux à constituer le fond. Il peut s'agir d'un accessoire incorporé à la machine, placé sur le trajet des emballages avant les moyens d'évacuation, ou bien d'un appareil séparé.

L'invention est, naturellement, applicable à l'industrie alimentaire. Dans ce cas, une stérilisation doit être effectuée avant l'emplissage et la fermeture des emballages. L'endroit le plus indiqué pour cette stérilisation se trouve juste en amont des moyens d'emplissage et de fermeture de l'emballage, mais dans ce cas, la stérilisation des espaces peu accessibles situés au fond des plis, notamment au voisinage dessoudures de solidarisation, exigerait des moyens plus puissants que ceux qui sont nécessaires pour le reste de la bande préparée, d'où une augmentation du prix de revient. Pour éviter cet inconvénient, il est avantageusement prévu que la bande subit une pré-stérilisation avant la formation des plis longitudinaux, par exemple par passage dans un bain d'eau oxygénée additionné d'agent mouillant. Les zones telles que les fonds de plis sont ainsi pré-stérilisés, et enferment un peu de produit de stérilisation dans la mesure même où elles sont peu accessibles, ce qui les protège contre une contamination.

L'invention va maintennant être exposée plus en détail à l'aide d'exemples pratiques, illustrés à l'aide des dessins, parmi lesquels :
Figures 1 à 5 sont des schémas en perspective illustrant différentes étapes de la formation d'un emballage,
Figure 6 est un schéma, en élévation, d'une installation complète,
Figure 7 est une vue en perspective montrant la formation des plis longitudinaux,

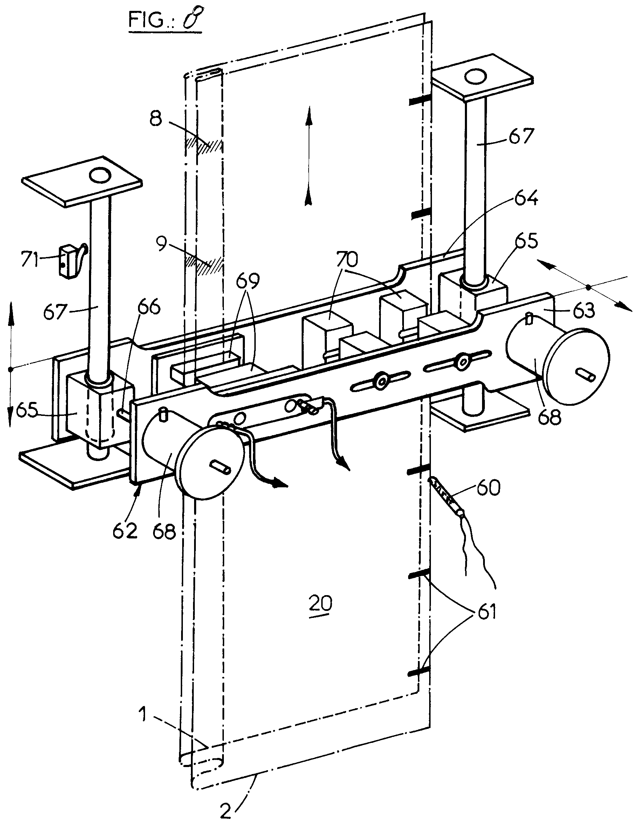

Figure 8 est une vue en perspective du dispositif de formation des soudures de solidarisation des plis,
Figure 9 est une vue en élévation de l'ensemble d'emplissage et fermeture des emballages.

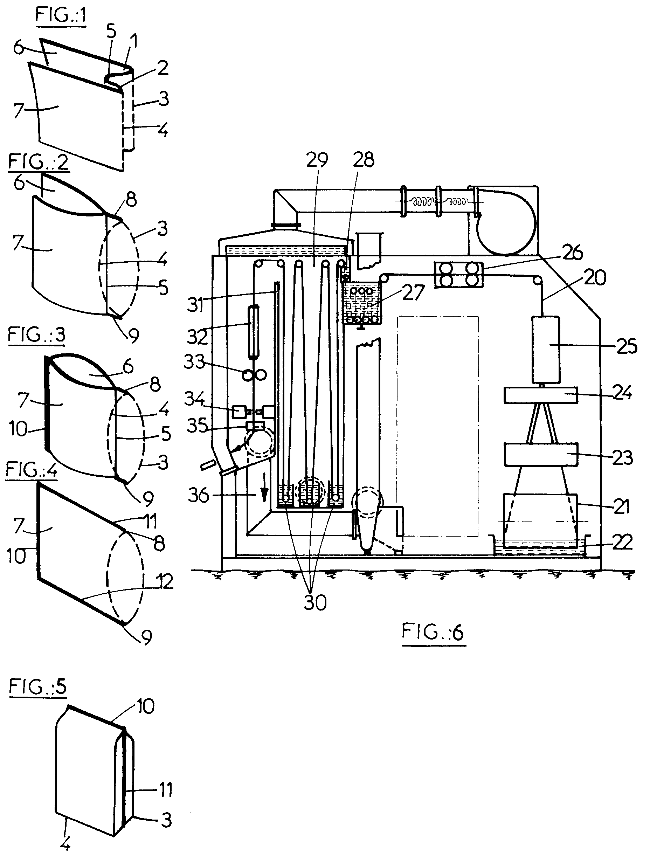

La figure 1 montre une bande de matière plastique dans laquelle ont été formés deux plis longitudinaux 1 et 2, ces plis ayant été renforcés par des soudures 3 et 4, qui ont été représentées en tirets. Sur la figure 1, la zone située entre les plis 1 et 2 constitue un pli, relativement peu accentué, et dirigé à l'opposé des plis 1 et 2. Deux panneaux 6 et 7 sont constitués par le reste de la bande à l'extérieur des plis 1 et 2, et ils sont libres sur cette figure.

A la figure 2, on retrouve les mêmes éléments qu'à la figure 1, mais en plus, deux soudures transversales 8, 9 ont été faites sur les plis 1 et 2 pour les solidariser. Ces soudures transversales sont représentées par un trait épais. Il doit être entendu que la bande s'étend, sur la figure 2, vers le haut et vers le bas par rapport à la partie représentée.

A la figure 3, les bords libres des côtés 6 et 7 ont été solidarisés par une nouvelle soudure longitudinale 10, au début des étapes d'emplissage et fermeture de l'emballage. L'ensemble de la bande constitue donc à ce moment une sorte de tube, dont le côté formé par la soudure 10, est rectiliqne, alors que le côté correspondant aux plis 1 et 2 et aux soudures 8 et 9 est de forme complexe.

La figure 4, l'emballage, supposé rempli, a été fermé par deux soudures supplémentaires transversales 11 et 12 qui se superposent respectivement, aux soudures de solidarisation 8 et 9. Le sachet peut, à ce moment, étant donné qu'il est fermé, être séparé par sectionnement des sachets avoisinants.

La figure 5 montre le même sachet que celui dela figure 4, après séparation et basculement de 90° pour reposer sur le fond plat délimité par les soudures 3, 4. Le sachet représenté à la figure 6, comme on le comprend, est prêt à être rangé ou expédié.

La figure 6 est une vue schématique d'une installation complète, où les divers éléments sont groupés pour former un ensemble de dimensions réduites.

La bande 20 fournie à partir d'un rouleau placé dans un dérouleur non représenté passe d'abord sous un rouleau à axe horizontal 21, qui plonge dans un bac 22 contenant une solution stérilisante constituée d'eau oxygénée additionnée d'un mouillant.

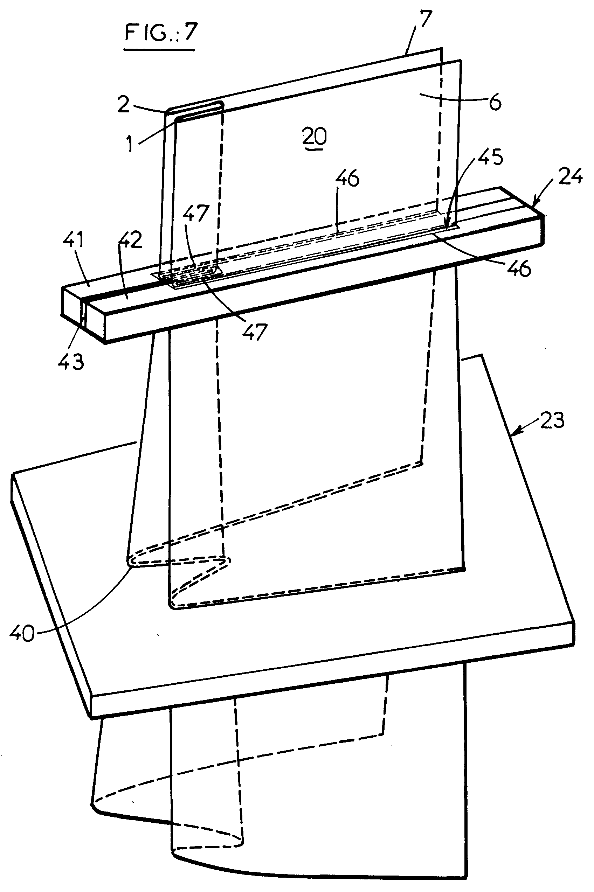

La bande passe ensuite dans une préfilière de formation de plis 23, puis dans une filière de formation de plis 24, dont le détail est donné à la figure 7. La bande traverse ensuite une unité dite "de formation de fond" 25 qui sera décrite plus en détail dans la suite.

Après l'unité de "formation de fond" 25, la bande passe par un poste de première mise en tension 26, dont le fonctionnement sera expliqué plus loin, puis dans un poste de lavage à l'eau oxygénée 27, et dans un dispositif d'essorage et raclage 28, destiné à éliminer l'eau oxygénée entraînée. La bande pénètre ensuite dans une enceinte étanche, dans laquelle elle passe d'abord dans une chambre de rinçage et séchage 29. Dans cette chambre, elle passe successivement dans trois bacs 30 à eau stérile, et entre ces bacs et après le dernier de ceux-ci, elle est soumise à une atmosphère sèche, et bien entendu stérile.

Avantageusement, cette atmosphère est formée d'air circulant dans un circuit fermé comprenant un filtre de qualité bactériologique.

A la sortie de cette chambre, la bande passe dans l'ensemble d'emplissage et fermeture des sachets, qui comprend une "filière" avant 31, dont le rôle est d'écarter les bords 6 et 7 de la bande pour permettre l'introduction du bec de déversement de produit à emballer, puis dans un dispositif 32 de confection de la soudure longitudinale 10, dans un poste de déroulage 33, puis dans un poste 34 de confection de la soudure transversale 11, 12, et dans un poste de sectionnement 35. Les sachets séparés passent ensuite dans des installations d'évacuation et de redressement 36.

Chacun des éléments de la machine sera décrit plus en détail dans la suite, en se référant le cas échéant aux figures plus détaillées correspondantes.

La figure 7 montre le détail de la préfilière 23 et de la filière 24. La préfilière 23 est constituée par une plaque métallique dans laquelle est découpée une fente 40 en forme de W, où la bande 20 est forcée à passer, par le poste 26 de première mise en tension 26.

La filière 24 est formée par quatre pièces métalliques 41 à 43, usinées avec précision, et laissant entre-elles, à nouveau, une fente 45 en forme de W, mais dont cette fois les branches extrêmes 46, ainsi que les tronçons intermédiaires 47, sont tous parallèles entre-eux. Pour fixer avec précision la position des plis 1 et 2 qu'on désire obtenir, la longueur cumulée des branches 46 et des tronçons 47 doit être égale à la largeur initiale de la bande 20, et la longueur des branches 46 de la fente 45 doit être égale à la longueur désirée pour les cotés 6 et 7 de la bande pliée.

On n'a pas représenté le poste d'exécution des soudures 3 et 4 de fixation des plis 1 et 2. Ces soudures ne sont pas nécessaires pour tous les types de matière plastique, en fonction notamment de l'élasticité du matériau. On décrit plus loin, dans le présent texte, un dispositif d'exécution de soudure longitudinale, à propos de l'ensemble d'emplissage et de fermeture de l'emballage, le même dispositif peut convenir pour l'exécution des soudures de renforcement 3 et 4.

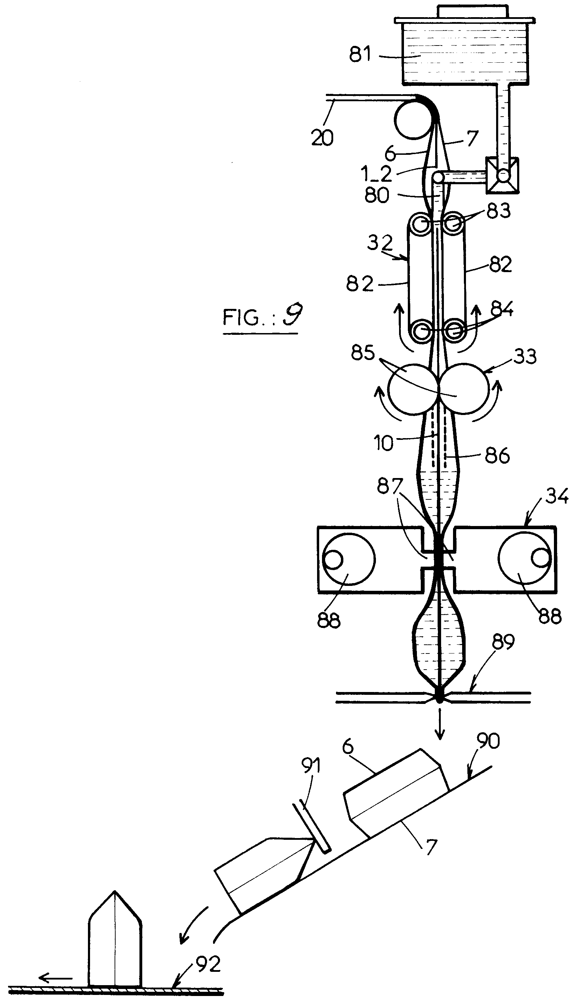

On va maintenant décrire l'appareillage 25 de formation des soudures de solidarisation 8, 9 des plis 1 et 2. La bande 20 passe d'abord devant un capteur photoélectrique 60, qui détecte le passage de repères 61 imprimes à l'avance sur la bande, à des intervalles que correspondent à celui de deux soudures 8, 9 successives, et également à la distance finale de séparation des sachets terminés. On notera que pour la facilité de l'exposé, on a antérieurement distingué les soudures 8 et 9. En fait, ces soudures sont identiques, si on désigne par soudure 8 celle qui se trouve en haut à la fin de l'exécution d'un sachet, et figure 9 celle qui se trouve en bas, chaque soudure prendra, d'un sachet à l'autre, successivement la désignation 8 ou 9.

Un châssis mobile 62 est constitué d'une plaque verticale 63, parallèle au plan de la bande 20, et d'une plaque verticale similaire 64, disposée parallèlement à la première, de l'autre côté de la bande. La plaque 64 est solidaire de deux coulisseaux 65 mobiles le long de deux glissières verticales 67, disposées de part et d'autre du trajet de la bande 20, et à peu près dans son plan. La plaque 63 est mobile sur deux glissières horizontales 66, sous l'action de deux vérins 68, à double effet, qui permettent de l'écarter ou de la rapprocher de la plaque 64. Les plaques 63 et 64 portent chacune un bloc chauffant 69, ces deux blocs constituent des électrodes de soudure, et se font vis-à-vis. Ils ne s'étendent que sur une partie relativement faible de la largeur de la bande 20 pliée, cette partie correspondant à la profondeur des plis 1 et 2, c'est-à-dire à la longueur des soudures de solidarisation 8, 9 qu'il s'agit de confectionner. Pour éviter un allongement ou une déformation de la bande 20, résultant de la disposition non symétrique des électrodes 69, les plaques 63 et 64 portent en outre chacune deux patins 70 non chauffants, disposés dans la partie de la bande qui n'est pas concernée par les soudures 8, 9. On évite ainsi les inconvénients du manque de symétrie.

Lorsque le capteur 60 détecte un repère 61, il commande l'actionnement des vérins 68 pour serrer les plis 1, 2 entre les électrodes 69, et le reste de la bande entre les patins 70. L'équipage constitué par les plaques 63 et 64, ainsi que les coulisseaux 65, est entraîné par la bande dans son mouvement ascendant, le long des glissières 67. Un détecteur de fin de course 71 commande l'actionnement en sens inverse des vérins 68, pour écarter l'une de l'autre les plaques 63 et 64, l'équipage redescend alors sous l'effet de son propre poids, il est alors prêt pour une nouvelle soudure. Le dispositif qu'on vient de décrire permet, d'une part, d'éviter toute déformation due au manque de symétrie du soudage, et d'obtenir un soudage progressif grâce à la durée appréciable de contact entre la bande 20 et les électrodes chauffantes 69.

La figure 9 est une vue schématisée de l'ensemble d'emplissage et fermeture des emballages, cette vue étant prise du côté de l'extrémité des bords 6 et 7 de la bande, et la "filière avant 29" n'étant pas représentée. Le repère 80 désigne la goulotte d'introduction du produit destiné à remplir l'emballage. Dans l'exemple représenté, il s'agit d'un produit liquide, contenu dans un bac 81, mais il pourrait s'agir aussi bien d'un produit pulvérulent, ou même d'un produit solide en morceaux de taille appréciable. Les bords 6, 7 de la bande s'écartent pour permettre à la goulotte 80 de s'introduire entre-eux, et de descendre vers le bas. Le poste 32 d'exécution dela soudure longitudinale 10 comprend deux courroies chauffantes en acier 82, portées par deux paires de rouleaux 83, 84. Les bords de la bande sont serrés entre les deux courroies 82, dont la vitesse linéaire au contact de la bande est la même que celle-ci. Bien entendu, ces bandes n'affectent qu'une petite partie de la largeur de la bande pliée, dans la région de ses bords, si bien que la goulotte 80 descend verticalement entre ces bandes 82 et les plis 1, 2 situés sur l'autre bord de la bande 20.

A la sortie du poste 32 de formation de la soudure 10, la bande passe dans un dispositif d'entraînement 33. Ce dispositif d'entraînement est composé de deux paires de rouleaux 85, chaque paire serrant une partie de la bande entre-elles. Une paire de rouleaux 85 est située pour serrer la partie de la bande qui est voisine de la soudure 10 qui vient d'être faite. Une autre paire de rouleaux 85, non visible sur la figure, est située, pour l'observateur de celle-ci, derrière les précédentes, serre la bande au niveau des plis 1, 2. La goulotte 80 descend entre les paires de rouleaux d'entraînement 85, et son extrémité 86 se situe un peu plus bas. Encore un peu plus bas, se trouve le dispositif 34 d'exécution de la soudure transversale qui ferme les emballages. Ce dispositif comprend deux électrodes de soudage chauffantes 87, mues par des excentriques 88, et qui pressent la bande 20 sur une partie du temps de rotation des excentriques. Pendant que les électrodes pressent la bande, elles se déplacent sensiblement à la même vitesse que celle-ci et dans le même sens, ce qui permet un temps suffisant de contact pour une bonne soudure. En variante, on utilise aussi un dispositif analogue à celui qui a été décrit à propos de la soudure de solidarisation. Dans ce cas, cependant, les électrodes chauffantes affectent toute la largeur de la bande 20, et, attendu que le mouvement se fait en descendant, l'équipage mobile est associé à un contre-poids pour lui permettre de remonter lorsque les vérins sont relâchés. On a représenté, dans le bas de la figure 9, un dispositif de sectionnement 89, du type à couteaux rotatifs, qui sépare les sachets les uns des autres.

Une fois séparés, les sachets tombent sur un plan incliné 90, sur lequel ils glissent sur un de leur côté 7. Dans leur déplacement, ils viennent heurter un doigt 91, situé du côté de la soudure 10, ils pivotent alors pour présenter en avant leur fond plat, et peuvent alors être déversés sur un transporteur 92, ou sur une palette, etc... en reposant sur leur fond plat.

On va maintenant revenir sur les moyens d'entraînement de la bande 20 au cours de son trajet dans la machine. L'existence des plis 1 et 2 pose un problème particulier du fait que, une fois que ceux-ci sont formés, l'épaisseur de la bande n'est pas constante sur toute sa largeur.

On a vu plus haut les précautions prises pour éviter des déformations ou tensions inacceptables au moment de la formation des soudures de solidarisation. Le poste 26 de première tension est destiné à entraîner la bande au cours de la formation des plis longitudinaux 1, 2, et de la formation des soudures de solidarisation de ces plis. Ce poste de première tension fonctionne en liaison avec le poste de déroulement 33, situé dans l'ensemble d'emplissage et fermeture des emballages. Un détecteur de tension de bande, non représenté, est situé en amont de cet ensemble, mais en aval des moyens d'essorage et raclage 28. Le dispositif de déroulage est conçu pour fonctionner à vitesse constante, en liaison avec le débit de matière emballée. Le dispositif de première tension est conçu pour imprimer à la bande une vitesse instantanée légèrement supérieure à celle du dispositif de déroulement. Le capteur de tension commande des interruptions très brèves, de l'ordre du millième de seconde, du fonctionnement du prétensionnement, toutes les fois que la tension tombe en-dessous d'une certaine valeur. On obtient ainsi une tension pratiquement constante de la bande sur toute la longueur de son trajet, compte tenu de son élasticité propre. De ce fait, la bande étant toujours sous la même tension, ne tend pas à dévier de sa trajectoire lorsqu'elle passe sur les rouleaux ou galets de guidage. Le même résultat peut être obtenu en faisant varier la vitesse du dispositif de déroulement.

## Revendications

1. Appareillage pour la confection, l'emplissage et la fermeture d'emballages présentant un fond plat de forme générale rectangulaire et des bords latéraux sensiblement parallèles, à partir d'une bande continue de matière plastique souple thermosoudable, qui comprend successivement :
- des moyens (23, 24) comprenant au moins une filière pourvue d'une fente en forme de W à travers laquelle on fait passer la bande pour plier la bande longitudinalement de façon à former deux parois (6, 7) parallèles reliées, sur un de leurs bords longitudinaux, par un soufflet constitué d'un premier pli longitudinal (1) et d'un second pli longitudinal (2), lesdites parois étant laissées libres sur leur autre bord longitudinal ;
- des moyens (25) pour solidariser, à intervalles réguliers, lesdits plis auxdites parois par une soudure transversale de solidarisation (8, 9) n'affectant qu'une partie de la largeur de la bande pliée ;
- des moyens (80) passant entre les bords longitudinaux libres des parois (6, 7) pour introduire la matière à emballer ;
- des moyens (32) pour souder entre eux lesdits bords longitudinaux libres ;
- des moyens (87) pour former, une soudure transversale (11, 12) se superposant à chaque soudure transversale de solidarisation précédemment effectuée, de façon à compléter la fermeture de l'emballage venant d'être rempli;
- des moyens (89) pour séparer les emballages les uns des autres.

2. Appareillage selon la revendication 1, caractérisé en ce qu'il est prévu pour disposer les deux plis longitudinaux (1, 2) symétriquement par rapport à l'axe de symétrie de la bande avant pliage.

3. Appareillage selon la revendication 1 ou 2, caractérisé en ce qu'il comprend des moyens pour souder les plis longitudinaux (1, 2) sur eux-mêmes après leur formation.

4. Appareillage selon la revendication 3, caractérisé en ce qu'il est prévu, sur le trajet de la bande, entre le poste de formation des plis longitudinaux et les moyens pour effectuer la soudure des plis sur eux-mêmes, des rouleaux presseurs capables d'aplatir ces plis.

5. Appareillage selon l'une des revendications 1 à 4, caractérisé en ce que les moyens pour réaliser les soudures transversales (8, 9) de solidarisation des plis (1, 2) comprennent un équipage mobile portant des pièces chauffantes (69) pour le soudage, et des patins (70) de compensation des tensions, agissant sur les parties de la largeur de la bande qui ne sont pas affectées par lesdites soudures de solidarisation (8, 9), l'équipage mobile étant conçu pour être entraîné par la bande pendant un temps suffisant pour l'exécution de la soudure, par l'intermédiaire des pièces chauffantes (69) et des patins (70), serrés contre la bande.

6. Appareillage selon l'une des revendications 1 à 5, et fonctionnant en continu, et comportant, après le poste de confection des plis longitudinaux (1, 2) et des soudures transversales (8, 9) de solidarisation, une installation de nettoyage et stérilisation, que la bande traverse avant de pénétrer dans l'ensemble d'emplissage et fermeture des emballages, caractérisé en ce qu'il est prévu des moyens (21, 22) pour effectuer une stérilisation préalable avant la formation desdits plis longitudinaux (1, 2).

7. Appareillage selon l'une des revendications 1 à 6, fonctionnant en continu et comportant des moyens de traitement physique ou chimique entre le poste de formation des plis longitudinaux et des soudures transversales de solidarisation et l'ensemble d'emplissage et fermeture des emballages, caractérisé en ce qu'il est prévu, sur le trajet de la bande, entre le poste de réalisation des soudures transversales de solidarisation et le dispositif de traitement, un dispositif de première mise en tension, un dispositif de déroulement étant situé sur le trajet de la bande après le dispositif de traitement et avant les moyens de séparation des sachets les uns des autres, en ce que le dispositif de première mise en tension est conçu pour pouvoir tourner à une vitesse supérieure à celle des moyens de déroulement, mais pour être interrompu à de courts intervalles lorsque la tension de la bande, mesurée entre le dispositif de traitement et le dispositif de déroulement, prend une valeur inférieure à une limite fixée à l'avance.

8. Appareillage selon l'une quelconque des revendications 1 à 7, caractérisé en ce qu'elle comprend, en outre, un poste (26) de première mise en tension prévu après les moyens (25) de réalisation de la soudure transversale de solidarisation, et un poste de déroulement (33) prévu en aval des moyens (32) de soudure des bords longitudinaux libres.

9. Appareillage selon la revendication 8, caractérisé en ce que le poste de première tension imprime à la bande une vitesse instantanée légèrement supérieure à celle du poste de déroulement.

10. Emballage fermé, empli d'un produit, constitué à partir d'une unique bande en matière plastique souple pliée longitudinalement de façon à former deux parois parallèles reliées, sur un de leurs bords longitudinaux, par un pli en forme de W, cet emballage comportant deux lignes de soudure latérales (11, 12) reliant les deux parois et solidarisant le pli en forme de W,
caractérisé en ce que
- il comporte une ligne de soudure (10) à son bord supérieur reliant les bords libres desdites parois le long de l'autre bord longitudinal,
- il présente un fond plat de forme générale rectangulaire dérivant du pli en forme de W, et
- lesdites lignes de soudure latérales (11, 12) sont sensiblement parallèles entre elles.

## Claims

1. An apparatus for producing, filling and closing packs having a flat bottom of general rectangular shape and substantially parallel lateral edges, from a continuous strip of heat-sealable soft plastic material, which comprises successively :
- means (23, 24) comprising at least one die provided with a W-shaped slit through which the strip is passed for folding it longitudinally so as to form two parallel walls (6, 7) connected, on one of their longitudinal edges, by a bellow comprised of a first longitudinal fold (1) and a second longitudinal fold (2), said walls being left free on their other longitudinal edge ;
- means (25) for fixing, at regular intervals, said folds to said walls by means of a fixing transverse weld (8, 9) affecting only a part of the width of the folded strip ;
- means (80) passing through the free longitudinal edges of the walls (6, 7) for introducing the material to be packaged ;
- means (32) for welding each other said free longitudinal edges ;
- means (87) for forming a transverse weld (11, 12) superimposed to each fixing transverse weld previously made, so as to complete the closure of the just-filled pack;
- means (85) for separating the packs from one another.

2. Apparatus as claimed in claim 1, characterized in that provision is made for arranging the two longitudinal folds (1, 2) symmetrically in relation to the axis of symmetry of the strip before folding.

3. Apparatus as claimed in claim 1 or 2, characterized in that it comprises means for welding the longitudinal folds (1, 2) to themselves after they have been formed.

4. Apparatus as claimed in claim 3, characterized in that there are provided, along the path of the strip, between the station for forming the longitudinal folds and the means for effecting welding of the folds to themselves, pressure rollers capable of flattening these folds.

5. Apparatus as claimed in any of claims 1 to 4, characterized in that the means for performing the transverse welds (8, 9) fixing the folds (1, 2) comprise a movable assembly carrying heating parts (69) for the welding, and pads (70) for compensating the tensions, acting on the parts of the width of the strip which are not affected by said fixing welds (8, 9), the movable assembly being designed so as to be moved by the strip during a period sufficient for the weld to be performed, by means of heating parts (69) and pads (70) clamped against the strip.

6. Apparatus as claimed in any of claims 1 to 5, operating continuously and comprising, after the station for making the longitudinal folds (1, 2) and transverse fixing welds (8, 9), a cleaning and sterilizing installation through which the strip passes before entering into the assembly for filling and closing the packs, characterized in that there are provided means (21, 22) for effecting presterilization before formation of the said longitudinal folds (1, 2).

7. Apparatus as claimed in any of claims 1 to 6, operating continuously and comprising physical or chemical treatment means between the station for forming the longitudinal folds and the transverse fixing welds and the assembly for filling and closing the packs, characterized in that there is provided, along the path of the strip, between the station for performing the transverse fixing welds and the treatment device, a first tensioning device, an unwinding device being located on the path of the strip after the treatment device and before the means for separating the bags from one another, wherein the preliminary tensioning device is designed so as to be able to rotate at a speed greater than that of the unwinding means, but so as to be interrupted at short intervals when the tension of the strip, measured between the treatment device and the unwinding device, assumes a value less than a predetermined limit.

8. Apparatus as claimed in any of claims 1 to 7, characterized in that it further comprises a station (26) of preliminary tensioning provided after the means (25) for carrying out the fixing transverse weld, and an unwinding device (33) located downstream the means (32) for welding the free longitudinal edges.

9. Apparatus as claimed in claim 8, characterized in that the preliminary tensioning station imparts to the strip an instantaneous speed slightly higher than that of the unwinding device.

10. Closed pack, filled with a product, made from a single strip of soft plastic material folded longitudinally so as to form two parallel walls connected, on one of their longitudinal edges, by a W-shaped fold, said pack having two lateral weld lines (11, 12) connecting said two walls and fixing the W-shaped fold, characterized in that :
- it comprises a weld line (10) on its higher edge connecting the free edges of said walls along the other longitudinal edge,
- it has a flat bottom of general rectangular shape deriving from said W-shaped fold, and
- said lateral weld lines (11, 12) are substantially parallel to each other.

## Patentansprüche

1. Anlage zum Herstellen, Fällen und Schließen von Verpackungen, die einen flachen Boden von allgemeiner rechteckiger Form und im wesentlichen parallele Seitenränder aufweisen, aus einem durchgehenden Band aus warmverschweißbarem biegsamem Kunststoff, die nacheinander umfaßt:
- Mittel (23, 24), die mindestens eine Düse umfassen, die mit einem W-förmigen Schlitz versehen ist, durch welchen man das Band hindurchtreten läßt, um das Band in Längsrichtung so zu falten, daß zwei parallele Wände (6, 7) geformt werden, die auf einem ihrer Längsränder durch einen Balg verbunden sind, der aus einer ersten Längsfalte (1) und einer zweiten Längsfalte (2) besteht, wobei diese Wände an ihrem anderen Längsrand frei gelassen sind;
- Mittel (25), um diese Falten in regelmäßigen Intervallen an diesen Wänden durch eine Querbefestigungsschweißung (8, 9) zu befestigen, die nur einen Teil der Breite des gefalteten Bandes betrifft;
- zwischen den freien Längsrändern der Wände (6, 7) hindurchtretende Mittel (80), um das zu verpackende Material einzuführen;
- Mittel (32), um diese freien Längsränder miteinander zu verschweißen;
- Mittel (87), um eine Querschweißung (11, 12) zu formen, die sich jeder zuvor hergestellten Querbefestigungsschweißung überlagert, so daß die Schließung der gefüllten Verpackung vervollständigt wird;
- Mittel (89), um die Verpackungen voneinander zu trennen.

2. Anlage nach Anspruch 1, dadurch gekennzeichnet, daß sie vorgesehen ist, um die beiden Längsfalten (1, 2) bezüglich der Symmetrieachse des Bandes vor dem Falten symmetrisch anzuordnen.

3. Anlage nach Anspruch 1 oder 2, dadurch gekennzeichnet, daß sie Mittel umfaßt, um die Längsfalten (1, 2) nach ihrer Formung miteinander zu verschweißen.

4. Anlage nach Anspruch 3, dadurch gekennzeichnet, daß auf dem Weg des Bandes zwischen der Station zur Formung der Längsfalten und den Mitteln zur Durchführung dar Verschweißung der Falten aneinander Druckwalzen vorgesehen sind, die in der Lage sind, diese Falten abzuflachen.

5. Anlage nach einem der Ansprüche 1 bis 4, dadurch gekennzeichnet, daß die Mittel zur Herstellung der Querbefestigungsschweißungen (8, 9) der Falten (1, 2) eine bewegliche Einrichtung umfassen, die Heizstücke (69) für die Verschweißung und Spannungsausgleichskufen (70) trägt, die auf die Teile der Breite des Bandes einwirken, die nicht von diesen Befestigungsschweißungen (8, 9) betroffen sind, wobei die bewegliche Einrichtung ausgelegt ist, um von dem Band während einer für die Durchführung der Verschweißung ausreichenden Zeit über die an das Band angepreßten Heizstücke (69) und Kufen (70) mitgenommen zu werden.

6. Anlage nach einem der Ansprüche 1 bis 5, die kontinuierlich arbeitet und hinter der Station zur Herstellung der Längsfalten (1, 2) und der Querbefestigungsschweißungen (8, 9) eine Reinigungs- und Sterilisierungsanlage umfaßt, die das Band durchquert, bevor es in die Gruppe zum Füllen und Schließen der Verpackungen eintritt, dadurch gekennzeichnet, daß Mittel (21, 22) vorgesehen sind, um vor der Formung dieser Längsfalten (1, 2) eine Sterilisierung vorzunehmen.

7. Anlage nach einem der Ansprüche 1 bis 6, die kontinuierlich arbeitet und zwischen der Station zur Formung der Längsfalten und der Querbefestigungsschweißungen und der Gruppe zum Füllen und Schließen der Verpackungen Mittel zur physikalischen oder chemischen Behandlung umfaßt, dadurch gekennzeichnet, daß auf dem Weg des Bandes zwischen der Station zur Herstellung der Querbefestigungsschweißungen und der Behandlungsvorrichtung eine Vorrichtung zum ersten Unterspannungsetzen vorgesehen ist, wobei eine Abrollvorrichtung auf dem Weg des Bandes hinter der Behandlungsvorrichtung und vor den Mitteln zum Trennen der Beutel voneinander angeordnet ist, daß die Vorrichtung zum ersten Unterspannungsetzen ausgelegt ist, um sich mit einer höheren Geschwindigkeit als die Abrollmittel drehen zu können, um jedoch in kurzen Intervallen unterbrochen zu werden, wenn die zwischen der Behandlungsvorrichtung und der Abrollvorrichtung gemessene Spannung des Bandes einen Wert annimmt, der kleiner als eine von vornherein festgelegte Grenze ist.

8. Anlage nach einem der Ansprüche 1 bis 7, dadurch gekennzeichnet, daß sie außerdem eine Station (26) zum ersten Unterspannungsetzen, die hinter den Mitteln (25) zur Herstellung der Querbefestigungsschweißung vorgesehen ist, und eine Abrollsstation (33) umfaßt, die hinter den Mitteln (32) zum Verschweißen der freien Längsränder vorgesehen ist.

9. Anlage nach Anspruch 8, dadurch gekennzeichnet, daß die Station zum ersten Unterspannungsetzen dem Band eine momentane Geschwindigkeit verleiht, die etwas höher als die der Abrollstation ist.

10. Mit einem Produkt gefüllte, geschlossene Verpackung, die aus einem einzigen Band aus biegsamem Kunststoff gebildet ist, das in Längsrichtung so gefaltet ist, daß zwei parallele Wände geformt werden, die an einem ihrer Längsränder durch eine W-förmige Falte verbunden sind, wobei diese Verpackung zwei seitliche Schweißlinien (11, 12) besitzt, die die beiden Wände verbinden und die W-förmige Falte befestigen,
dadurch gekennzeichnet, daß
- sie an ihrem oberen Rand eine Schweißlinie (10) aufweist, die die freien Ränder dieser Wände längs des anderen Längsrandes verbindet,
- sie einen flachen Boden von allgemeiner rechteckiger Form besitzt, der sich aus der W-förmigen Falte ergibt, und
- diese seitlichen Schweißlinien (11, 12) zueinander im wesentlichen parallel sind.
